# EUROPEAN PATENT SPECIFICATION

(11) **EP 3 868 593 B1**
(45) Date of publication and mention of the grant of the patent: **01.01.2025**
(21) Application number: 19873723.1
(22) Date of filing: 20.09.2019
(51) Int. Cl.: B60K 23/08, B60K 17/22, B60K 17/35, B60K 17/36, B60K 17/02, B60B 35/12, B60B 35/14

(54) **POWER-TRANSMISSION AXLE FOR VEHICLE AND VEHICLE**
KRAFTÜBERTRAGUNGSACHSE FÜR FAHRZEUG UND FAHRZEUG
AXE DE TRANSMISSION DE PUISSANCE POUR VÉHICULE, ET VÉHICULE

(30) Priority: 16.10.2018 BR 102018071263
(43) Date of publication of application: 25.08.2021
(73) Proprietor: IVECO S.P.A., 10156 Torino (IT)
(72) Inventor: DE SÁ, Thiago Malaquias Domingos, 32240-690 Contagem (BR); DE MELO, Willian Cesar, 35701-107 Sete Lagoas (BR)
(74) Representative: Studio Torta S.p.A.
(86) International application number: PCT/BR2019/050413
(87) International publication number: WO 2020/077425

(56) References cited:
- EP-A1- 3 333 001
- EP-A2- 2 574 490
- EP-A2- 2 888 126
- WO-A1-2012/145580
- WO-A1-2014/088566
- WO-A1-2015/080722
- WO-A1-2016/205480
- WO-A1-2017/020108
- BR-A2- 102016 029 390
- DE-A1- 102017 003 905
- GB-A- 736 884

## Description

### FIELD OF THE INVENTION

This invention refers, in a general sense, to a propeller shaft of an automotive vehicle, which has a coupling and decoupling system to allow the selection of the vehicle's traction type, transmitting or not the power to the subsequent shaft. This invention also refers to an automotive vehicle comprising the present propeller shaft.

### BACKGROUND OF THE INVENTION

According to the state of the art, automotive vehicles and particularly those intended for the transportation of goods, such as trucks, are usually pulled by their rear shaft having a powertrain formed by the engine and gearbox mounted at the front of the vehicle. The connection between the powertrain and the traction wheels is formed by a shaft, commonly called the cardan shaft, which, on the one hand, is connected to the output of the powertrain, usually the gearbox and, on the other hand, is connected to the differential of the shaft that is responsible for transmitting the power to the wheels.

In the case of road transport vehicles, such as truck-tractors with two rear shafts, the vehicle may have a 6×2 or 6×4 traction configuration, i.e., of the six wheels of the vehicle, only two are pulled, usually the two wheels of the first rear shaft, or the four wheels of the two rear shafts are pulled. In some vehicle applications configured for "off-road", they may also have an 8×4 or even 6×6 or 8×8 traction configuration.

The use of at least two traction shafts, as in a 6×4 configuration, can be quite interesting, both for legal reasons (in certain countries, such as Brazil, to transport a higher load limit the vehicle must have a 6×4 traction configuration), and reasons of use, as in the case of vehicles for off-road use, such as sugarcane or mining vehicles.

However, when the vehicle is not loaded, to save fuel and tires, it is desirable that one of the shafts is not used. If the traction configuration is, for example, a 6×2 configuration, one of the rear shafts, the one not pulled, can potentially be suspended and thus achieve a reduction in fuel consumption and tire wear. This is possible using some solutions that are already known, and where an air bag is generally used to suspend the shaft, thus taking advantage of the compressed air line fitted in these models of vehicles.

However, this solution cannot be used in vehicles with a 6×4 or 8×4 traction configuration, for example, since a traction shaft cannot be suspended because the power to the suspended shaft would be lost.

So, there is a need to allow the coupling or decoupling of the traction of at least one shaft of a vehicle, particularly a cargo vehicle, such as a truck or truck-tractor.

The state of the art reveals some solutions by which it is possible to automatically or manually select the traction of one or more shafts. A known solution is to engage or disengage the gear from the central differential that sends power to the shaft. This solution, however, cannot be used in the 6×4 or 8×4 traction configurations, since no central differential is generally employed; rather the traction is transmitted from one differential to another, sequentially, through a cardan shaft.

Another more elaborate solution, such as that revealed in the state-of-the-art document US 2012/0260758, uses more complex features such as lamella clutches and electronic management. These solutions are complex and expensive, and may not work properly for very high torques, as in the case of goods transport vehicles, whose torque at the engine output can easily exceed 1500 Nm, and reach up to around 3000 Nm.

Another solution revealed in the state of the art can be observed in the document PCTBR201605050182, which refers to a coupling system driven by pneumatic devices installed concentrically with the propeller shaft between shafts to, thus, enable the coupling/decoupling of one of the pulled shafts. Although functional and revealing a solution to the means known to the state of the art, this option could be improved and refined, particularly with regard to the construction and assembly of the components responsible for the coupling and decoupling. More specifically, this state-of-the-art solution reveals a complex construction, requiring excessive expenditure of time and resources for its manufacture, assembly and application to vehicles.

Other examples known in the art are disclosed in publications DE102017003905 A1, EP2574490 A2, GB736884 A or EP3333001 A1.

Thus, considering the present scenario, it is observed that there is still a need for a simple, practical and functional technical solution that can be easily applied to commercial cargo transport vehicles, without the need for substantial investments and resources, thus enabling the effective application of a safe solution to simpler models of vehicles with 6×4, 8×4 or similar traction configurations. The invention aims, among others, to overcome these inconveniences of the state of the art.

### DESCRIPTION OF THE INVENTION

So, in the light of the above, it is one of the aims of the present invention to provide a propeller shaft for a motor vehicle, particularly those used for transporting loads with a traction configuration of 6×4 or 8×4, where said propeller shaft is equipped with technical, constructive and functional characteristics designed and developed to allow for the decoupling and coupling of at least one of the traction shafts in order to eliminate the problems, limitations and inconveniences of the solutions previously known to the state of the art, and as summarized above.

Another aim of this invention is to provide a vehicle, such as those used for the transportation of loads, which is configured with traction of the 6×4 or 8×4 type, and equipped with at least one propeller shaft as mentioned above, installed in place of the conventional cardan shaft of the vehicle, allowing for the selection of the type of traction.

Thus, as described above, and with the aim of achieving the aforementioned objectives and technical effects, the present invention refers to a propeller shaft and a vehicle as claimed in the appended set of claims.

### BRIEF DESCRIPTION OF THE DRAWINGS

The characteristics, advantages and technical effects of the present invention, as indicated above, will be better understood by a person skilled in the art from the following detailed description, provided for merely exemplative and non-restrictive purposes, of some embodiments, and with reference to the following schematic figures, where:
- Figure 1 shows a schematic side view of a cargo transport vehicle, such as a truck or tractor-truck, possessing a 6×4 traction configuration;
- Figure 2 shows a perspective view of the propeller shaft according to one embodiment of the present invention;

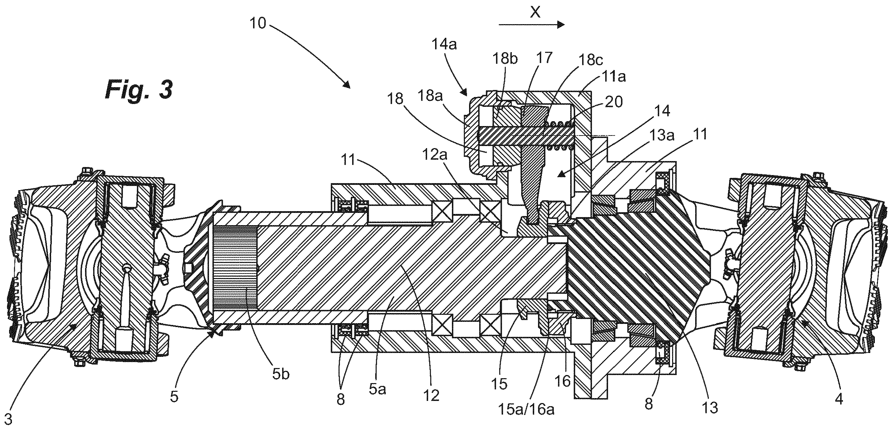

- Figure 3 shows a side view in cross-section of the propeller shaft, as indicated by line A-A represented in Figure2, according to the present invention, in the coupled state;

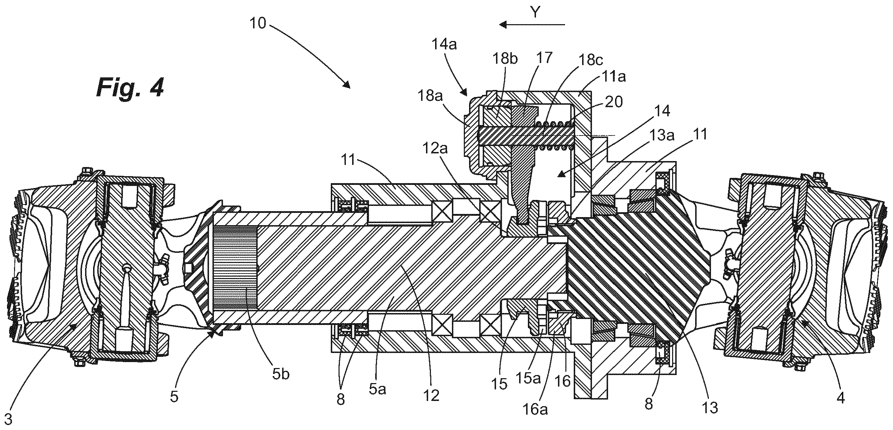

- Figure 4 shows a side view in cross-section of the propeller shaft, as indicated by line A-A represented in Figure 2, according to the present invention, but in the decoupled state; and

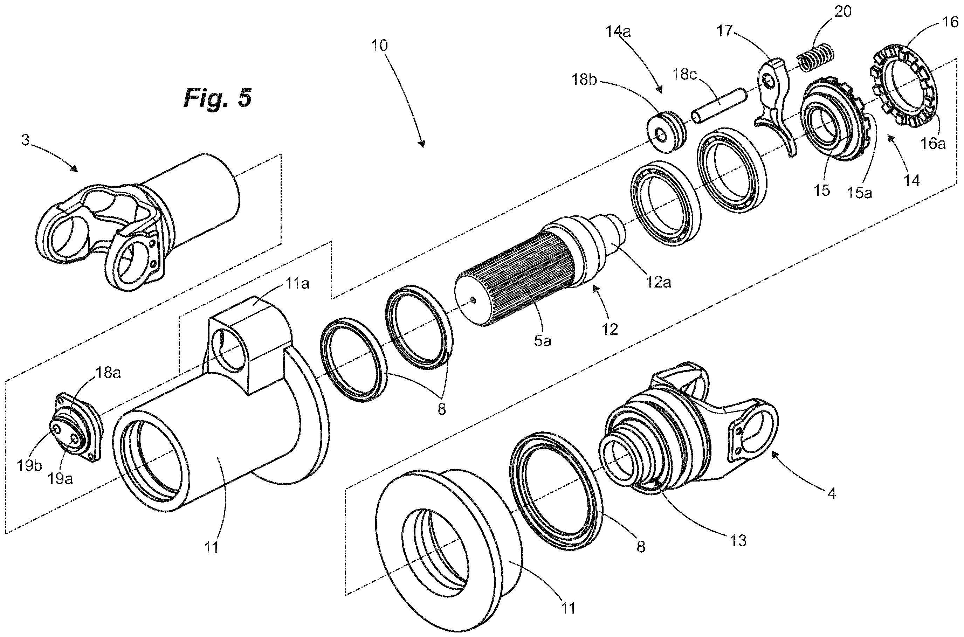

- Figure 5 is a schematic view in exploded perspective of the propeller shaft, according to the present invention.

### DESCRIPTION OF EMBODIMENTS OF THE INVENTION

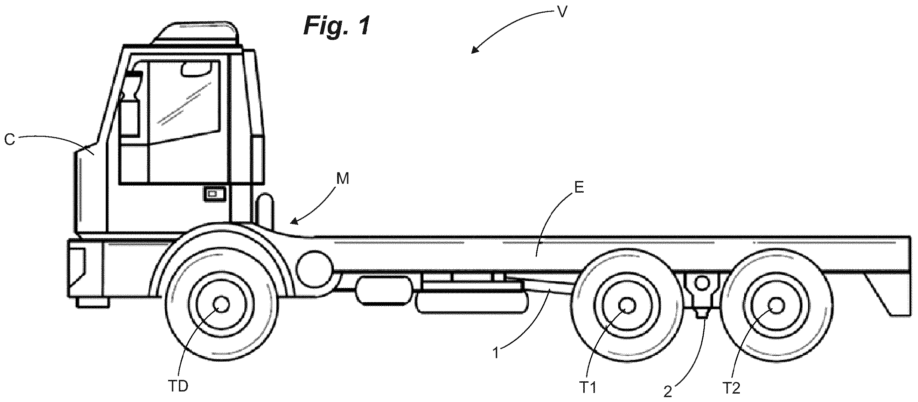

The invention is now described in relation to its particular embodiments with reference to the figures attached as examples of embodiments. These figures are schematic, and their dimensions and/or proportions may not correspond to reality, since they merely aim to describe the invention didactically. In addition, certain known and common constructive details may have been omitted for better clarity and concision of the description provided below. The reference numbers indicated in the figures are repeated along the different views to indicate equal or similar technical characteristics. In addition, the terms sometimes used here, such as: above, below, upper, lower, side, right, left, frontal, rear and their variants should be interpreted according to the guidance given in Figure 1.

Initially, for merely illustrative purposes, and particularly for the due contextualization and better understanding of the matter, according to the present invention, Figure 1 schematically represents a vehicle (V) intended for the transportation of cargo or goods, such as a truck known to the state of the art. This vehicle (V), as schematically represented in Figure 1, may be, for example, a model manufactured and marketed by CNH Industrial N. V.

Basically, it is possible to say that the vehicle (V) comprises a control and operation cab (C) under which are provided a transmission powertrain (M), such as a combustion engine associated with a gearbox, which are mounted on a chassis (E) supported by a front shaft (TD), a first rear shaft (T1) and a second rear shaft (T2). According to this description, these rear shafts (T1, T2) are pulled and, thus, will potentially be indicated as the first traction shaft (T1) and the second traction shaft (T2).

From the drive assembly (M), which is formed of the gearbox within which are arranged a series of gears and other components responsible for transmitting the power generated in the engine and, from which extends a first cardan shaft 1 to a first differential of the first traction shaft (T1) and, from the differential of the first traction shaft (T1), extends a second cardan shaft 2 to the differential of the second traction shaft (T2). The power is generally divided equally between the first and second differentials to the wheels of the first (T1) and second (T2) traction shafts. Thus, the differentials transmit the power to the wheels of each shaft in a normal way using a crown/pinion system and epicycloidal gears, which is already well known to persons skilled in the art and, thus, will not be explored in this case. In addition, other details of the vehicle (V) are represented in a schematic way and do not require further explanation, since they are known in conventional cargo transport vehicles.

As mentioned above, it may be of interest, in certain applications, such as an unloaded vehicle (V), that power is not transmitted from the differential of the first traction shaft (T1) to the differential of the second traction shaft (T2), causing the vehicle (V) with 6x4 traction to take on a 6x2 traction configuration. With this 6x2 traction configuration, it is possible for the second traction shaft (T2) to be raised, generating fuel and tire savings. The raising of the second rear shaft can be done by normal means known to the state of the art, such as using components driven by the pneumatic system of the vehicle itself.

The present invention aims, precisely, to allow for the coupling or decoupling, selectively and according to the interests of the driver, of the second differential from the second traction shaft (T2), transforming the traction configuration from 6x4 to a 6x2 traction configuration. Of course, in this more in-depth description of one embodiment of the invention, reference is made to a 6×4 and 6×2 traction configuration, but the invention can obviously be used in any traction configuration where one wishes to activate or deactivate a second traction shaft, such as a 4×4 / 4×2, 8×4 / 8×2 traction configuration, etc.

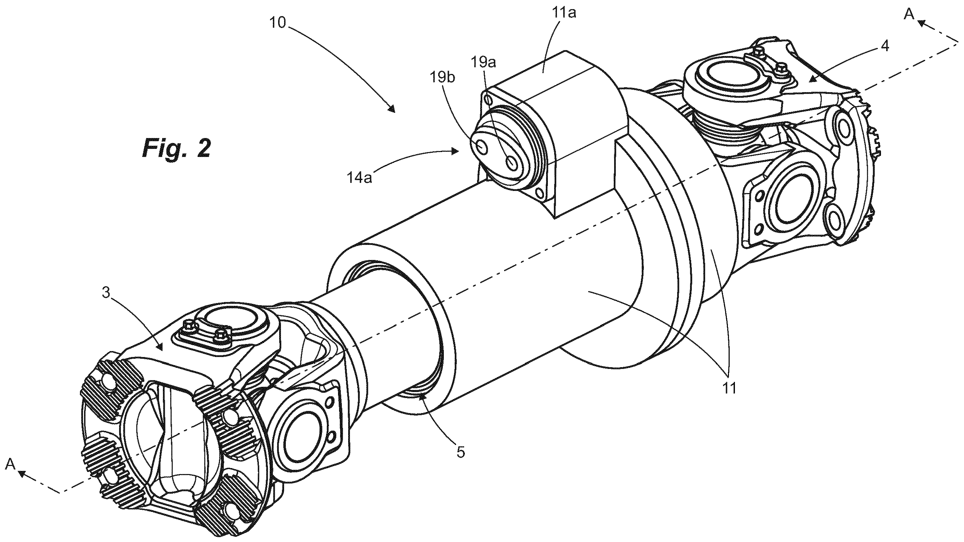

With reference now to Figure 2, a transmission shaft 10 is shown, such as for coupling in a cardan shaft or replacing a conventional cardan shaft, which is specifically mounted between the first traction shaft (T1) and the second traction shaft (T2) of a vehicle (V). In this regard, the shaft 10 can be mounted between the differentials of two rear traction shafts of a vehicle comprising, for example, a 6×4 traction configuration, or even replace the second cardan shaft 2.

Since the first rear shaft (T1) and the second rear shaft (T2) can have different assembly heights or can also be mounted to the suspension of the vehicle, being subject to oscillations in height and, consequently, at a distance from each other, crossheads 3 and 4 are provided at the ends of the shaft 10, which form the mechanical connection with the rest of the transmission powertrain of the vehicle. Furthermore, the shaft 10 comprises an assembly 5 of two concentric toothed shafts, which allow for the compensation of the distance that may exist between the first traction shaft (T1) and the second traction shaft (T2).

It is worth noting that both the crossheads 3 and 4, and the assembly 5, are mechanical constructions used in cardan shafts that are widely known and used in the state of the art, and can thus be replaced by any equivalent mechanical constructions, such as homokinetic joints or flanges associated with screws and nuts, in cases where the coupling is mounted on a long cardan shaft. The decision to choose crossheads, homokinetic joints or other mechanical construction elements does not alter the technical effects foreseen for the present invention.

In this regard, based on the scenario summarized above, it may be said that the present invention refers to a new propeller shaft 10 comprising a first shaft segment 12, which can be mounted on a power output, and a second shaft segment 13, which can be mounted on a power input to receive the power coming from the first shaft segment 12. Both shaft segments 12, 13 are concentrically mounted within a housing 11, so that the first shaft segment 12 can be rotated independently in relation to the second shaft segment 13, where this first shaft segment 12 comprises, on the one hand, a power input and, on the other hand, is mounted concentrically with the second shaft segment 13. The second shaft segment 13 also has, on one side, a toothed face (16) to receive a power input and, on the other side, it has a power output. Thus, the first 12 and second 13 shaft segments are coupled and decoupled selectively by means of a flange 15, which is mounted concentrically on the first shaft segment and comprises a toothed face for the respective coupling with the toothed face of the second shaft segment. Furthermore, this flange 15 can move between a coupled and uncoupled position due to the coaxial displacement along the said first shaft segment 12.

According to one embodiment of the present invention, the said flange 15 is driven by a coupler 14 formed of an actuator 14a that possesses a shaft 18c equipped with a means of return 20, and a fork 17 connected to said flange 15 provided with a groove in its internal diameter for connection with a grooved part 12a provided for in the first shaft segment 12, and teeth 15a on its lateral face to enable the connection with the teeth 16a arranged on the toothed face 16 of the second shaft segment 13.

In these circumstances, it may be noted that the propeller shaft 10, according to the present invention, can be installed in place of the second cardan shaft 2, between the first traction shaft (T1) and the second traction shaft (T2) of said vehicle (V). Thus, the first shaft segment 12 is mounted next at a power output deriving from the first cardan shaft 1, and the second shaft segment 13 is mounted on the power input, for example, on the differential of the second traction shaft (T2), said shaft segments 12, 13 being selectively connected through said coupler 14 which is responsible for blocking and transmitting the power between the shaft segments 12, 13.

Also, in order to maintain the good functioning, and increase the service life, of said propeller shaft 10, the object of the present invention, said housing 11 comprises sealant elements 8 to securely hold a lubricating and cooling fluid in contact with said shaft segments 12, 13, as well as with the actuator 14.

Of course, although it is mentioned here that the first shaft segment 12 can be mounted on a power output and the second shaft segment 13 can be mounted on a power input, the configuration may be reversed, i.e., the first shaft segment 12 can be mounted on a power input and the second shaft segment 13 can be mounted on a power output without any prejudice or difference in relation to the technical effect achieved by the present invention.

According to one embodiment, said toothed face 16 may be a fixed flange that is provided with a grooved surface on its inner diameter for connection with a respective grooved part 13a positioned at the end of the second shaft segment 13. In addition, as noted above, the toothed face 16 or said fixed flange possesses teeth 16a on its lateral face to enable the connection with the teeth 15a arranged on the side face of the mobile flange 15 of the first shaft segment 12.

According to one embodiment of the present invention, said driver 14a can be of any model and use different appropriate means, such as, but not limited to, mechanical, magnetic, electrical or hydraulic means or a combination thereof, provided that it can enable the movement of said fork 17 between at least two positions and, consequently, achieve coupling or decoupling between the said first and second shaft segments 12, 13.

According to one embodiment of the coupler 14, in accordance with the present invention, said driver 14a comprises a chamber 18 with airtight closure that is formed by a fixed cover 18a installed in a branch 11a of the housing 11, and inside said chamber 18 a mobile piston 18b is positioned that is supported on the shaft 18c which supports the aforementioned fork 17 and the means of return 20.

According to one embodiment of the present invention, the fixed cover 18a of the driver 14a is equipped with a channel 19a, that is fluidly connected to the hydraulic or pneumatic system of the vehicle (V) for feeding the chamber 18. Thus, on introducing compressed air or hydraulic fluid inside the chamber 18, this tends to expand its volume, shifting the mobile piston 18b axially along the shaft 18c, towards the arrow "X", and, consequently, the fork 17, causing the mobile flange 15 to move until it achieves the corresponding coupling with the fixed flange 16, thus transmitting power to the second shaft segment 13 and, consequently, to the second traction shaft (T2). Under these conditions, the driver is able to alter the configuration and traction of the vehicle from a configuration of 6×2 to 6×4 by simply activating and feeding said chamber 18 of the driver 14a.

Conversely, in order for the vehicle (V) to achieve a traction configuration of the 6×2 type, it is necessary for the pressure inside the chamber 18 of the driver 14a to be alleviated, allowing the fork 17 to shift the movable flange 15 in the direction of the arrow "Y", causing it to decouple from the toothed face 16, interrupting the power transmission to the second traction shaft (T2) and thus allowing this second shaft to be raised.

Optionally, the fixed cover 18a of the driver 14a comprises a complementary input 19b to allow for the installation of sensors, for example, a sensor for monitoring the pressure inside the chamber 18.

In accordance with the aforementioned embodiments, compressed air or hydraulic fluid is used. The use of these components as one of the ways to enable the displacement of the fork 17 and, consequently, the mobile flange 15, is appropriate since the lines of compressed air and, potentially, of hydraulic fluid already present in most commercial vehicles and machinery can be used.

Naturally, as highlighted above, although this description refers to the use of compressed air to vary the pressure inside the chamber 18, other means can be provided, such as other fluids, like oil or water, or magnetic or even electromechanical means, such as solenoid valves. Furthermore, although it is noted that the mobile flange 15 is in the disengaged position when the pressure inside the chamber 18 is approximately equal to the ambient pressure, it is clear that this embodiment can be reversed, so that the flange 15 is in the disengaged position only when the pressure inside the chamber 18 is increased, but this is less preferential, due to questions of operating safety. Nevertheless, although this specification refers to the terms "ambient pressure" and "increased pressure" with ambient pressure as a reference, it is clear that other pressure differentials that are not necessarily based on atmospheric pressure such as the base pressure can be used, including higher or even negative pressures, using a vacuum, provided that the pressure differential applied in the chamber 18 is sufficient to cause a shift of the mobile flange 15 through an axial movement, as indicated above.

Additionally, it is important to highlight that, to ensure the return of the fork 17 and, consequently, the decoupling of the mobile flange 15, when there is a reduction of pressure in the chamber 18, and for the purpose of preventing the coupling medium from escaping from a coupled position to a decoupled position, the means of return 20 may be a helical spring, ensuring that the coupler 14 remains in a predetermined position, such as a decoupled standard position, as represented in the drawings, or, conversely, a coupled standard position. Obviously, the means of return can be suppressed if other forms of displacement of the fork 17 are used, such as magnetic or electromechanical means. Nevertheless, other means of return can also be provided, such as magnetic, mechanical or hydraulic means, etc.

Specifically, the coupling and decoupling of the coupler 14 must be done with the vehicle stationary, that is, without the first shaft segment 12 rotating, however, though less advantageous, there is nothing to prevent such coupling and/or decoupling being done with the vehicle in motion.

Finally, and as observed above, the present invention also refers to a vehicle (V) for the transportation of cargo or goods, which comprises a control and operation cabin (C) and under which are provided a transmission powertrain (M), such as a combustion engine associated with a gearbox, which are mounted on a chassis (E), which is supported by a front shaft (TD), a first rear traction shaft (T1) and a second rear traction shaft (T2), connected by a propeller shaft 10, like that observed above.

According to specific embodiments of the present invention, said vehicle (V) is a truck, such as those used in the road transportation of cargo or goods and, more particularly, which possesses the traction configuration of the 6×4 or 8×4 type, or the like.

In the light of the above, it is important to clarify that this description is intended only to present and describe in exemplary form, specific embodiments of a propeller shaft for a vehicle, in accordance with the present invention. For these reasons, as persons skilled in the art should understand, various modifications and constructive combinations of equivalent elements are possible without, thus, departing from the scope of protection defined by the attached claims.

## Claims

1. Propeller shaft for a vehicle, comprising:
a first shaft segment (12);
a second shaft segment (13);
wherein said first and second shaft segments (12, 13) are mounted concentrically within a housing (11), the first shaft segment being able to rotate independently in relation to the second shaft segment,
wherein the first shaft segment (12) possesses, on the one hand, a power input and, on the other hand, is mounted concentrically on the second shaft segment (13);
the second shaft segment (13) comprising, on the one hand, a toothed face (16) to receive a power input and, on the other hand, having a power output,
wherein said first and second shaft segments can be coupled or decoupled selectively by a flange (15),
the flange (15) comprising a toothed face for coupling to the toothed face (16) of the second shaft segment (13) and being mounted concentrically on the first shaft segment (12);
the flange (15) also being able to move between a coupled and a decoupled position due to coaxial displacement along said first shaft segment (12),
the propeller shaft being **characterized by** further comprising, at its ends, crossheads (3, 4) for mechanical connection with the rest of the transmission powertrain of the vehicle (V), and also possessing an assembly (5) formed of toothed concentric shafts to compensate for the distance between a first traction shaft (T1) and a second traction shaft (T2) of the vehicle (V).

2. Propeller shaft for a vehicle, according to claim 1, wherein that said flange (15) is activated using a coupler (14) formed of an actuator (14a) that possesses a shaft (18c) equipped with a means of return (20), and a fork (17) connected to said flange (15) that interacts with the toothed face (1) of said second shaft segment (13).

3. Propeller shaft for a vehicle, according to claim 1, wherein said flange (15) comprises a groove in its internal diameter of connection with a grooved part (12A) provided in the first shaft segment (12), and teeth (15A) on its side face for connecting with the teeth (16a) positioned on the toothed face (16) of the second segment shaft (13).

4. Propeller shaft for a vehicle, according to claim 1, wherein said first shaft segment (12) is mounted on a power output deriving from a first cardan shaft (1), and the second shaft segment (13) is mounted on a power input of a differential of the second traction shaft (T2).

5. Propeller shaft for a vehicle, according to claim 1, wherein said housing (11) comprises sealant elements (8) for holding a lubricating and cooling fluid in contact with said shaft segments (12, 13) and the coupler (14).

6. Propeller shaft for a vehicle, according to claim 1, wherein said toothed face (16) is foreseen in a fixed flange provided with a grooved surface in its internal diameter of connection with a corresponding grooved part (13a) positioned at the end of said second shaft segment (13).

7. Propeller shaft for a vehicle, according to claim 2, wherein the said actuator (14a) is of the mechanical, magnetic, electrical or hydraulic type or a combination thereof.

8. Propeller shaft for a vehicle, in accordance with claim 2, wherein said actuator (14a) comprises a chamber (18) with an airtight closure formed by a fixed cover (18a) installed in a branch (11a) of said housing (11), and inside said chamber (18) a mobile piston (18b) is positioned that is supported by a shaft (18c) that supports said fork (17) and the means of return (20).

9. Propeller shaft for a vehicle, according to claim 8, wherein said fixed cover (18a) is equipped with a channel (19a) that is directly connected to the hydraulic or pneumatic system of the vehicle (V).

10. Propeller shaft for a vehicle, according to claim 8, wherein said fixed cover (18a) comprises a complementary input (19b) for the installation of sensors, such as a pressure monitoring sensor.

11. Propeller shaft for a vehicle, according to claim 2, wherein said means of return (20) is a helical spring.

12. Vehicle, comprising a control and operation cabin (C) and under which a transmission powertrain (M) is provided, such as a combustion engine associated with a gearbox, which are mounted on a chassis (E) that is supported by a front shaft (TD), a first rear traction shaft (T1) and a second rear traction shaft (T2), **characterized by** the fact that the first rear traction shaft (T1) and the second rear traction shaft (T2) are connected by means of a propeller shaft (10) according to any of the previous claims.

13. Vehicle, according to claim 12, wherein said vehicle is intended for the transportation of cargo and goods and has a 6×4 or 8×4 traction configuration.

## Patentansprüche

1. Gelenkwelle für ein Fahrzeug, umfassend:
ein erstes Wellensegment (12);
ein zweites Wellensegment (13);
wobei die genannten ersten und zweiten Wellensegmente (12, 13) konzentrisch innerhalb eines Gehäuses (11) montiert sind, wobei das erste Wellensegment eingerichtet ist, in Bezug auf das zweite Wellensegment unabhängig zu rotieren,
wobei
das erste Wellensegment (12) einerseits einen Leistungseingang besitzt und andererseits konzentrisch auf dem zweiten Wellensegment (13) montiert ist;
das zweite Wellensegment (13) einerseits eine verzahnte Fläche (16) zum Aufnehmen eines Leistungseingangs und andererseits einen Leistungsausgang umfasst,
wobei
die genannten ersten und zweiten Wellensegmente selektiv durch einen Flansch (15) gekoppelt oder entkoppelt werden können,
der Flansch (15) eine verzahnte Fläche zum Koppeln mit der verzahnten Fläche (16) des zweiten Wellensegments (13) umfasst und konzentrisch auf dem ersten Wellensegment (12) montiert ist;
der Flansch (15) ferner eingerichtet ist, sich zwischen einer gekoppelten und einer entkoppelten Position durch koaxiale Verschiebung entlang des genannten ersten Wellensegments (12) zu bewegen,
wobei die Gelenkwelle **dadurch gekennzeichnet ist, dass** sie an ihren Enden Kreuzgelenke (3, 4) zur mechanischen Verbindung mit dem restlichen Antriebsstrang des Fahrzeugs (V) umfasst, und ferner eine Baugruppe (5) umfasst, die aus verzahnten konzentrischen Wellen ausgebildet ist, um den Abstand zwischen einer ersten Antriebswelle (T1) und einer zweiten Antriebswelle (T2) des Fahrzeugs (V) auszugleichen.

2. Gelenkwelle für ein Fahrzeug nach Anspruch 1, wobei der Flansch (15) durch einen Koppler (14) betätigt wird, der aus einem Aktuator (14a) gebildet ist, der eine Welle (18c) mit einer Rückstellvorrichtung (20) umfasst, und einer Gabel (17), die mit dem Flansch (15) verbunden ist und mit der verzahnten Fläche (1) des zweiten Wellensegments (13) zusammenwirkt.

3. Gelenkwelle für ein Fahrzeug nach Anspruch 1, wobei der Flansch (15) in seinem Innendurchmesser eine Nut zum Verbinden mit einem im ersten Wellenabschnitt (12) vorgesehenen Nutteil (12A), und an seiner Seitenfläche Zähne (15A) zum Verbinden mit den auf der Zahnfläche (16) angeordnet Zähnen (16a) der zweiten Segmentwelle (13) umfasst.

4. Gelenkwelle für ein Fahrzeug nach Anspruch 1, wobei das erste Wellensegment (12) auf einem Leistungsausgang einer ersten Kardanwelle (1) montiert ist und das zweite Wellensegment (13) auf einem Leistungseingang eines Differenzials der zweiten Antriebswelle (T2) montiert ist.

5. Gelenkwelle für ein Fahrzeug nach Anspruch 1, wobei das Gehäuse (11) Dichtungselemente (8) umfasst, um ein Schmier- und Kühlmittel in Kontakt mit den Wellensegmenten (12, 13) und dem Koppler (14) zu halten.

6. Gelenkwelle für ein Fahrzeug nach Anspruch 1, wobei die verzahnte Fläche (16) in einem festen Flansch vorgesehen ist, der eine gerillte Oberfläche in seinem Innendurchmesser zum Verbinden mit einem entsprechenden gerillten Teil (13a) am Ende des zweiten Wellensegments (13) aufweist.

7. Gelenkwelle für ein Fahrzeug nach Anspruch 2, wobei der Aktuator (14a) mechanischer, magnetischer, elektrischer oder hydraulischer Art ist oder eine Kombination derselben.

8. Gelenkwelle für ein Fahrzeug nach Anspruch 2, wobei der Aktuator (14a) eine Kammer (18) mit einem luftdichten Verschluss umfasst, der durch eine feste Abdeckung (18a) gebildet wird, die in einem Zweig (11a) des Gehäuses (11) angeordnet ist, und wobei innerhalb der Kammer (18) ein beweglicher Kolben (18b) angeordnet ist, der von einer Welle (18c) gestützt wird, die die Gabel (17) und die Rückstellvorrichtung (20) lagert.

9. Gelenkwelle für ein Fahrzeug nach Anspruch 8, wobei die feste Abdeckung (18a) einen Kanal (19a) umfasst, der direkt mit dem hydraulischen oder pneumatischen System des Fahrzeugs (V) verbunden ist.

10. Gelenkwelle für ein Fahrzeug nach Anspruch 8, wobei die feste Abdeckung (18a) einen komplementären Eingang (19b) zum Installieren von Sensoren, wie etwa eines Drucküberwachungssensors, umfasst.

11. Gelenkwelle für ein Fahrzeug nach Anspruch 2, wobei die Rückstellvorrichtung (20) eine Schraubenfeder ist.

12. Fahrzeug, umfassend eine Steuer- und Bedienkabine (C) und einen darunter angeordneten Antriebsstrang (M), wie etwa einen Verbrennungsmotor in Verbindung mit einem Getriebe, die auf einem Fahrgestell (E) montiert sind, das von einer Vorderachse (TD), einer ersten hinteren Antriebswelle (T1) und einer zweiten hinteren Antriebswelle (T2) gelagert wird, **dadurch gekennzeichnet, dass** die erste hintere Antriebswelle (T1) und die zweite hintere Antriebswelle (T2) durch eine Gelenkwelle (10) gemäß einem der vorhergehenden Ansprüche verbunden sind.

13. Fahrzeug nach Anspruch 12, wobei das Fahrzeug für den Transport von Fracht und Gütern bestimmt ist und eine 6x4- oder 8x4-Traktionskonfiguration aufweist.

## Revendications

1. Arbre de transmission pour un véhicule, comprenant :
un premier segment d'arbre (12) ;
un second segment d'arbre (13) ;
dans lequel lesdits premier et second segments d'arbre (12, 13) sont montés de manière concentrique dans un logement (11), le premier segment d'arbre pouvant tourner de manière indépendante par rapport au second segment d'arbre,
dans lequel le premier segment d'arbre (12) possède, d'une part, une entrée de puissance et, d'autre part, est monté de manière concentrique sur le second segment d'arbre (13) ;
le second segment d'arbre (13) comprenant, d'une part, une face dentée (16) pour recevoir une entrée de puissance et, d'autre part, ayant une sortie de puissance,
dans lequel lesdits premier et second segments d'arbre peuvent être accouplés ou désaccouplés de manière sélective par une collerette (15),
la collerette (15) comprenant une face dentée pour un accouplement à la face dentée (16) du second segment d'arbre (13) et étant montée de manière concentrique sur le premier segment d'arbre (12) ;
la collerette (15) pouvant également bouger entre une position accouplée et une position désaccouplée en raison d'un déplacement coaxial le long dudit premier segment d'arbre (12),
l'arbre de transmission étant
**caractérisé en ce qu'**il comprend en outre, à ses extrémités, des traverses (3, 4) pour une liaison mécanique avec le reste du groupe motopropulseur de transmission du véhicule (V), et possède également un ensemble (5) formé d'arbres concentriques dentés pour compenser la distance entre un premier arbre de traction (T1) et un second arbre de traction (T2) du véhicule (V).

2. Arbre de transmission pour un véhicule, selon la revendication 1, dans lequel ladite collerette (15) est activée à l'aide d'un coupleur (14) formé d'un actionneur (14a) qui possède un arbre (18c) équipé d'un moyen de retour (20), et d'une fourchette (17) reliée à ladite collerette (15) qui entre en interaction avec la face dentée (1) dudit second segment d'arbre (13).

3. Arbre de transmission pour un véhicule, selon la revendication 1, dans lequel ladite collerette (15) comprend une rainure dans son diamètre interne de liaison avec une partie rainurée (12A) fournie dans le premier segment d'arbre (12), et des dents (15A) sur sa face latérale pour une liaison avec les dents (16a) positionnées sur la face dentée (16) du second segment d'arbre (13).

4. Arbre de transmission pour un véhicule, selon la revendication 1, dans lequel ledit premier segment d'arbre (12) est monté sur une sortie de puissance provenant d'un premier arbre à cardan (1), et le second segment d'arbre (13) est monté sur une entrée de puissance d'un différentiel du second arbre de traction (T2) .

5. Arbre de transmission pour un véhicule, selon la revendication 1, dans lequel ledit logement (11) comprend des éléments d'étanchéité (8) pour maintenir un fluide de lubrification et de refroidissement en contact avec lesdits segments d'arbre (12, 13) et le coupleur (14) .

6. Arbre de transmission pour un véhicule, selon la revendication 1, dans lequel ladite face dentée (16) est prévue dans une collerette fixe pourvue d'une surface rainurée dans son diamètre interne de liaison avec une partie rainurée (13a) correspondante positionnée à l'extrémité dudit second segment d'arbre (13).

7. Arbre de transmission pour un véhicule, selon la revendication 2,
dans lequel ledit actionneur (14a) est du type mécanique, magnétique, électrique ou hydraulique ou une combinaison de ceux-ci.

8. Arbre de transmission pour un véhicule, selon la revendication 2,
dans lequel ledit actionneur (14a) comprend une chambre (18) avec une fermeture étanche à l'air formée par un cache fixe (18a) installé dans une branche (11a) dudit logement (11), et à l'intérieur de ladite chambre (18) un piston mobile (18b) est positionné qui est supporté par un arbre (18c) qui supporte ladite fourchette (17) et le moyen de retour (20).

9. Arbre de transmission pour un véhicule, selon la revendication 8, dans lequel ledit cache fixe (18a) est équipé d'un canal (19a) qui est relié directement au système hydraulique ou pneumatique du véhicule (V).

10. Arbre de transmission pour un véhicule, selon la revendication 8, dans lequel ledit cache fixe (18a) comprend une entrée complémentaire (19b) pour l'installation de capteurs, par exemple un capteur de surveillance de pression.

11. Arbre de transmission pour un véhicule, selon la revendication 2, dans lequel ledit moyen de retour (20) est un ressort hélicoïdal.

12. Véhicule, comprenant une cabine de commande et de fonctionnement (C) et sous laquelle un groupe motopropulseur de transmission (M) est fourni, par exemple un moteur à combustion associé à une boîte de vitesses, qui sont montés sur un châssis (E) qui est supporté par un arbre avant (TD), un premier arbre de traction arrière (T1) et un second arbre de traction arrière (T2), **caractérisé par le fait que** le premier arbre de traction arrière (T1) et le second arbre de traction arrière (T2) sont reliés au moyen d'un arbre de transmission (10) selon l'une quelconque des revendications précédentes.

13. Véhicule, selon la revendication 12, dans lequel ledit véhicule est destiné au transport de fret et de marchandises et a une configuration de traction 6x4 ou 8x4.
